(19) Europäisches Patentamt
European Patent Office
Office européen des brevets

(11) **EP 2 514 546 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
*B23F 1/06* (2006.01)       *B23C 5/10* (2006.01)
*B23F 21/12* (2006.01)

(21) Anmeldenummer: **12002396.5**

(22) Anmeldetag: **02.04.2012**

(54) **Verfahren zum Formfräsen**

Profile trimming method

Procédé de fraisage de profils

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2011 DE 102011017411**

(43) Veröffentlichungstag der Anmeldung:
**24.10.2012 Patentblatt 2012/43**

(73) Patentinhaber: **LIEBHERR-VERZAHNTECHNIK GmbH**
**87437 Kempten (DE)**

(72) Erfinder: **Mundt, Alois**
**87435 Kempten (DE)**

(74) Vertreter: **Laufhütte, Dieter et al**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**WO-A1-2008/133517     WO-A1-2010/144929**

EP 2 514 546 B1

**Beschreibung**

Die Erfindung betrifft ein Verfahren zum Formfräsen einer Werkstückverzahnung, insbesondere eines Zahnrads auf einer Verzahnmaschine mit einem Fingerfräser.

Zahnformfräser in Fingerform werden auf Verzahnmaschinen zum Verzahnen von Zahnrädern sowie zum Fräsen von Schnecken nach dem Formverfahren eingesetzt. Der Einsatz derartiger Fingerfräser beginnt bei Zahnrädern etwa bei Modul 10 und reicht bis zu den größten Verzahnabmessungen. Beim Fräsen von Schnecken werden diese Fingerfräser auch bei Schnecken und Schneckenrädern mit einem weit kleineren Modul eingesetzt.

Auch zum Vorfräsen bei Großverzahnungen werden meist Werkzeuge in Fingerform oder noch besser Scheibenfräser verwendet. Fingerfräser werden vorzugsweise dort eingesetzt, wo andere Werkzeuge z.B. aus Kollisionsgründen ausscheiden, wie beispielsweise bei der Herstellung von geschlossenen Pfeilverzahnungen, bei Doppelschrägverzahnungen mit kleinem Zwischenraum oder Werkstücken, bei denen kein geeigneter Überlaufweg für ein scheiben- oder schneckenförmiges Werkzeug vorhanden ist, dies vor allem bei Verzahnungen mit großem bis sehr großem Modul. Zudem ist ein Fingerfräswerkzeug im Vergleich zu einem Wälzfräser in diesem Größenbereich recht preiswert. Damit ist das beschriebene Verfahren auch bei geringeren Losgrößen für Großverzahnungen interessant.

Voraussetzung für den Einsatz von Fingerfräsern in einer Verzahnmaschine sind geeignete Aufnahmemittel. Die Verzahnmaschinen sind dazu mit einem passenden Fingerfräskopf ausgestattet, der den Fingerfräser aufnimmt und zur Rotation um seine Fräserachse antreibt. Bei bekannten Verzahnmaschinen verläuft die Fräserachse des Fingerfräsers senkrecht zur Werkstückachse des herzustellenden Zahnrades, wodurch die Herstellung echter Pfeilverzahnungen und Doppelschrägverzahnungen mit geringem oder keinem Zwischenraum mit Hilfe des Fingerfräsers ermöglicht wird.

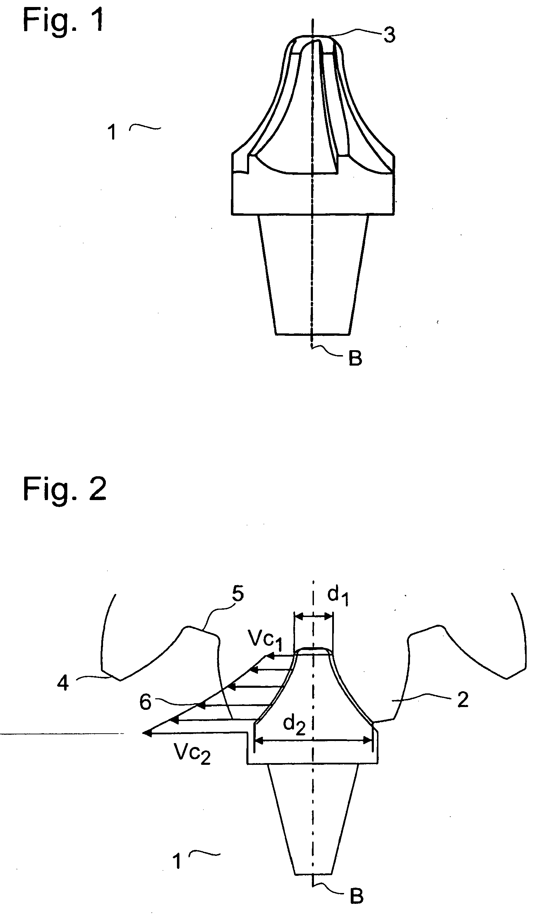

Die Fingerfräser weisen in der Regel ein kegelförmiges Profil auf, wobei sich der Profildurchmesser in Richtung der Stirnschneiden verjüngt. Ein Beispiel für einen bekannten Fingerfräser ist den beiden Figuren 1 und 2 zu entnehmen.

Insbesondere Figur 2 zeigt schematisch den Einsatz des Fingerfräsers 1 zur Herstellung einer Evolventen-Verzahnung am Zahnrad 2. Der Fingerfräser 1 wird mit seiner Längsachse senkrecht zur Werkstückachse ausgerichtet und rotiert zur einseitigen/beidseitigen Zahnflankenbearbeitung um seine Fräserachse B. Die Form des Fingerfräsers ist kegelförmig ausgeprägt, wobei sich der Durchmesser in Richtung der Stirnschneide 3 verjüngt. Der Durchmesser $d_2$ des Fingerfräsers 1 im Bereich des Zahnkopfes 4 ist demnach verhältnismäßig groß gegenüber dem Durchmesser $d_1$ im Bereich des Zahnfußes 5.

Die gewählte Profilform des Fingerfräsers 1 bewirkt eine variable Schnittgeschwindigkeit $v_c$ über den gesamten Umfang der Fräserschneide. Die Pfeile 6 charakterisieren das resultierende Schnittgeschwindigkeitsprofil entlang der Fräserachse B, wobei die betragsmäßig höchste Schnittgeschwindigkeit $v_{c2}$ im Zahnkopfbereich und die minimale Schnittgeschwindigkeit $v_{c1}$ im Zahnfußbereich anliegt. Die Auswahl einer optimalen Schnittgeschwindigkeit für die Rotationsbewegung ist bedingt durch den Durchmesserunterschied nicht möglich. Einerseits darf eine bestimmte Höchstgeschwindigkeit an der Fräserspitze nicht überschritten werden, andererseits ist eine bestimmte Mindestschnittgeschwindigkeit erforderlich.

Als Konsequenz des vorliegenden Geschwindigkeitsprofils 6 tritt eine ungleichmäßige Abnutzung bzw. Abstumpfung der einzelnen Schneidenbereiche entlang der Fräserachse B auf. Dies macht ein häufiges Nachschärfen der Fingerfräserschneiden erforderlich, um eine ausreichende Bearbeitungsqualität gewährleisten zu können. Weiterhin wird die mögliche Fräserstandzeit davon nachteilig beeinträchtig. Nur durch Einstellung niedriger mittlerer Schnittgeschwindigkeiten mit Rücksicht auf die Schneidenteile mit großem Durchmesser kann die Fräserstandzeit verlängert werden. Um eine partielle Überlastung des Fräsers zu vermeiden, muss die Fräserdrehzahl dementsprechend angepaßt werden, was zu insgesamt längeren Bearbeitungszeiten führen kann.

Aufgabe der vorliegenden Erfindung ist es, die vorstehend aufgezeigten Nachteile beim Formfräsen unter Verwendung von Fingerfräsern zu überwinden.

Diese Aufgabe wird durch ein Verfahren zum Formfräsen einer Werkstückverzahnung, insbesondere Zahnrad, auf einer Verzahnmaschine mit einem Fingerfräser nach Anspruch 1 gelöst.

Erfindungsgemäss verläuft die Fingerfräserachse in etwa parallel zur bearbeiteten Zahnflanke des Werkstückes und der Fingerfräser weist in Fräserachsenrichtung ein nahezu gleichbleibendes Durchmesserprofil_vom Zahnkopfbereich bis hin zum Zahnfussbereich entlang seiner Fräserachse auf, um eine annähernd gleichmässige Schnittgeschwindigkeit über der Fräserbreite und über die gesamte Zahnflanke des Werkstückes zu erreichen, wobei der Fingerfräser eine Aussenkontur zur Herstellung/Bearbeitung einer Evolventen- oder Zykloidenverzahnung aufweist.

Hierdurch kann eine weitgehend konstante Schnittgeschwindigkeit über die gesamte Zahnflanke des zu erstellenden Werkstückes erreicht werden. Die Auswahl einer geeigneten Rotationsgeschwindigkeit des Fingerfräsers um seine Fräserachse wird zudem durch das erfindungsgemäße Verfahren erheblich vereinfacht, da ein Betrieb des Fräsers im optimalen Schnittgeschwindigkeitsbereich über die gesamte Schneidefläche möglich ist und nicht einzelne Teilbereiche gesondert berücksichtigt werden müssen. Ferner tritt eine regelmäßige Abnutzung entlang der gesamten Schneidefläche vom Zahnkopf bis hin zum Zahnfuß auf, was sich positiv auf die erreichbaren Fräserstandzeiten auswirkt. Insgesamt gesehen kann durch diesen Ansatz auch die Bearbeitungszeit für das Werkstück optimiert werden.

Erfindungsgemäss wird das Verfahren mit dem Fingerfräser zur Herstellung von Verzahnungsprofilen mit zyklischen Kurven wie z.B. Evolventen- oder ZykloidVerzahnungen verwendet. Aufgrund der vorausgesetzten Parallelität von Fräserachse und der zyklischen Kurve bzw. Evolvente des herzustellenden Werkstückes ist demnach ein Querschnittsprofil des Fingerfräsers mit verhältnismäßig geringfügigen Durchmesserabweichungen entlang der Fräserachse notwendig. Folglich kann bei der Herstellung dieser Verzahnungen ein annähernd konstantes Schnittgeschwindigkeitsprofil über die gesamte Zahnflanke erzielt werden.

Das Verfahren ist bevorzugt für eine einseitige Zahnflankenbearbeitung ausgelegt. Die Fräserachse des Fingerfräsers ist jeweils in etwa parallel zur zu bearbeitenden Zahnflanke verstellbar. Das Ausrichten des Fingerfräsers erfolgt entweder durch Verstellen des Fingerfräsers oder alternativ durch Verfahren des Werkstückes bzw. des Bearbeitungskopfes tangential zur Verzahnung. Eine kombinierte Verstellmöglichkeit des Fingerfräsers, des Bearbeitungskopfes sowie des Werkstückes ist ebenfalls denkbar.

Mögliche Ausführungen des Fingerfräsers sind neben kompletten Fräsern aus einem Stück (Schaftwerkzeuge) auch zusammengesetzte Fräser wie z.B. Wendeschneidplattenfräser oder Fräser mit Wechselköpfen.

In der Erfindung kann ein Fingerfräser zum Formfräsen einer Werkstückverzahnung, insbesondere Zahnradverzahnung oder ähnliche Profile angewendet werden. Dabei weist der Fingerfräser in Fräserachsenrichtung ein nahezu gleichbleibendes Durchmesserprofil auf, wodurch zur Werkstückbearbeitung eine in etwa parallele Ausrichtung der Fräserachse zur zu bearbeitenden Zahnflanke bzw. zum entsprechenden Zahnflankenabschnitt gewährleistet werden kann. Die konkrete Ausführung der Fräserschneide hängt von der herzustellenden Flankenform ab. Beispielsweise sind bei Fingerfräsern zur Evolventenverzahnung oder Zykloidverzahnungen geringfügige Schwankungen im Durchmesserprofil möglich. Im Gegensatz zu bekannten kegelförmigen Fingerfräsern fallen diese jedoch verhältnismäßig klein aus. Nur so kann ein nahezu konstantes Schnittgeschwindigkeitsprofil entlang der Fräserachse erreicht werden.

Die Erfindung betrifft also ein Verfahren zum Formfräsen einer Werkstückverzahnung, insbesondere Zahnradverzahnung, das auf einer Verzahnmaschine mit einem Fingerfräser ausgeführt wird. Erfindungswesentlich an dem beanspruchten Verfahren ist, dass die Fräserachse in etwa parallel zur bearbeiteten Zahnflanke ausgerichtet wird, um eine annähernd konstante Schnittgeschwindigkeit über die gesamte Fräserbreite zu erzielen.

Die erfindungsgemäße Vorgehensweise reduziert die Abnutzungserscheinungen am eingesetzten Fingerfräser bzw. hält diese über die gesamte Schneidelänge gleichmäßig. Ferner erlaubt das Verfahren eine vereinfachte Auswahl einer optimalen Schnittgeschwindigkeit zum Betrieb des Fingerfräsers, da die Durchmesserunterschiede entlang der Fräserachse nicht mehr so stark unterschiedlich sind. Damit können höhere Schnittgeschwindigkeiten gefahren werden, ohne dass die Gefahr einer partiellen Überlastung bestimmter Fräserbereiche besteht. Dies führt zu kürzeren Werkstückbearbeitungszeiten.

Vorzugsweise verfolgt das erfindungsgemäße Verfahren eine einseitige Zahnflankenbearbeitung des herzustellenden Werkstücks bzw. eines Teilbereichs der Werkstückzahnflanke. Demnach wird der Fingerfräser nach jeder bearbeiteten Zahnflanke erneut ausgerichtet, um eine parallele Ausrichtung der Fräserachse zur nachfolgenden Zahnflanke zu gewährleisten.

Weitere Vorteile und Einzelheiten der Erfindung werden anhand eines Ausführungsbeispiels und entsprechender Zeichnungen näher erläutert. Es zeigen:

Fig. 1:      Eine schematische Darstellung eines aus dem Stand der Technik bekannten Fingerfräsers,

Fig. 2:      eine Darstellung des Fingerfräsers aus Fig. 1 in Bearbeitungsposition,

Fig. 3:      eine Darstellung des erfindungsgemäßen Fingerfräsers in Bearbeitungsposition,

Fig. 4:      eine weitere Darstellung der Bearbeitungspositionen des Fingerfräsers und

Fig. 5:      eine Darstellung eines nicht zur Erfindung gehörigen Fingerfräsers in Bearbeitungsposition zur Bearbeitung eines Teilbereichs eines Zahnflankenprofils.

Auf die Figuren 1 und 2 wurde bereits im einleitenden Teil der Beschreibung eingegangen, weshalb in diesem Teil der Beschreibung nicht erneut Details zu den gezeigten Darstellungen ausgeführt werden sollen.

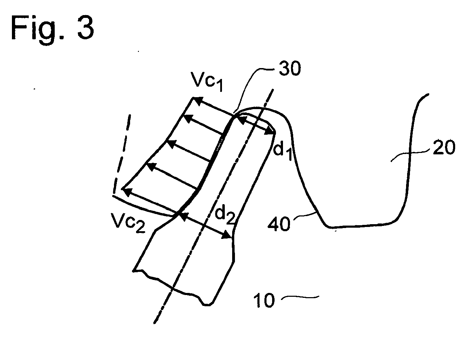

Figur 3 zeigt eine schematische Darstellung des Fingerfräsers 10 bei der Verzahnung des Werkstückes in Form eines Zahnrades 20 mit einer Evolventenverzahnung. Der Fingerfräser 10 wird am Fräserkopf der CNC-Verzahnmaschine montiert und um die Fräserachse A in Rotation versetzt. Die resultierende Werkzeugdrehzahl wird mit n bezeichnet und wird in Umdrehungen/Minute angegeben. Die Maschinenkinematik richtet den Fingerfräser 10 entsprechend zur Bearbeitung der Zahnflanken des Zahnrades 20 aus. Dabei können entweder der Fräser bzw. die Werkzeugaufnahme samt Werkstück oder beide in Kombination verfahren werden.

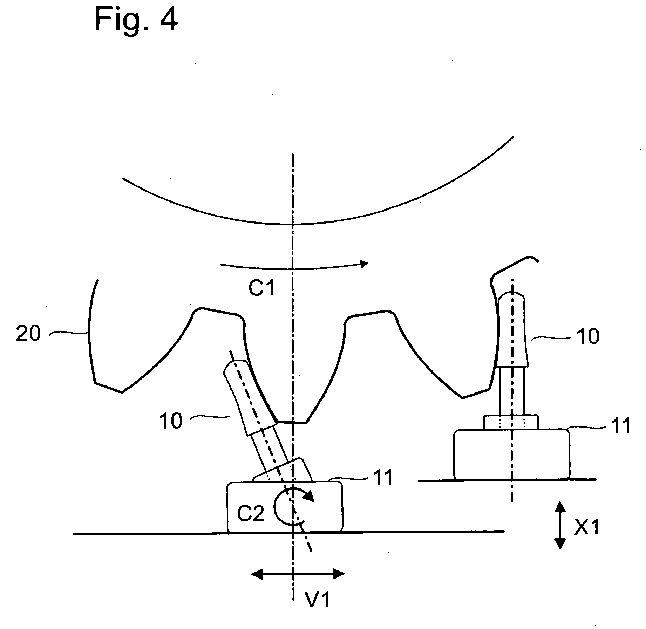

Figur 4 zeigt die Maschinenachsen zur Ausrichtung des Fingerfräsers 10. Der Fräser 10 wird im Fräskopf 11 entweder aus der Mittelachse um die Achse C2 herausgeschwenkt und nahezu parallel zur Zahnflanke des Zahnrades 20 ausgerichtet oder aber seitlich in V1-Richtung verfahren und in X1-Richtung zugestellt, bis seine Längsachse nahezu parallel zur Zahnflanke ausgerichtet ist. Bei schrägverzahnten Werkstücken oder bei Korrekturen der Zahnflanke über ihre Breite muss zusätzlich noch die C1-Achse verfahren werden.

Im Einzelnen ist der Figur 3 zu entnehmen, dass die Fräserachse A nahezu parallel zur herzustellenden Evolvente 30 des Zahnrades 20 verläuft. Die neuartige Formgebung des Fingerfräsers 10 zeigt im Gegensatz zum kegelförmigen Fräser 1 der Figuren 1 und 2 ein Querschnittprofil, das über den gesamte Fräserumfang vom Zahnkopfbereich bis hin zum Zahnfußbereich entlang der Achse A nur geringfügige Durchmesserabweichungen aufweist.

Die Differenz der gekennzeichneten Durchmesser $d_1$, $d_2$ ist verhältnismäßig klein, weshalb folglich nur geringfügige Schnittgeschwindigkeitsunterschiede über die gesamte Länge der Fräserschneide auftreten. Die während der Bearbeitung vorliegende Schnittgeschwindigkeit $v_{c1}$ im Bereich des Zahnfußes ist dabei annähernd betragsgleich zur Schnittgeschwindigkeit $v_{c2}$ im Bereich des Zahnkopfes.

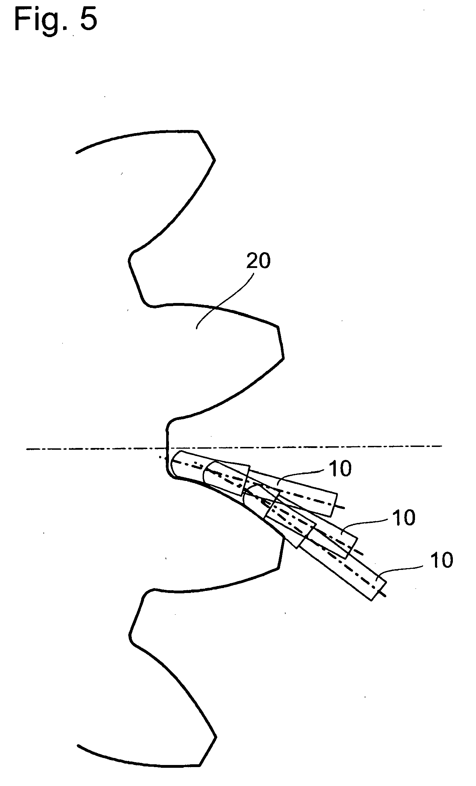

Eine teilweise Bearbeitung von Zahnflanken, wie in der Figur 5 gezeigt, gehört nicht zur Erfindung. Hier lassen sich auch Profile mit unterschiedlichen Profilformen (siehe WO 2005/060650) über die Zahnhöhe bearbeiten oder auch asymmetrische Profile, wenn zwischen den Schnitten jeweils der Fräser 10 gewechselt wird. Ebenso wären Profilmodifikationen, wie z.B. Kopfrücknahmen unter Verwendung eines unkorrigierten Fräsers möglich. Die dazu notwendige CNC-Software ist für diese Art der Bearbeitung sowieso notwendig.

Die Berechnung der allgemein gültigen Schnittgeschwindigkeit $v_c$ erfolgt über folgende Formel:

$$v_c = \frac{\Pi \cdot d \cdot n}{1000[mm]},$$

wobei d für den Werkzeugdurchmesser und $n$ für die Werkzeugdrehzahl um die Fräserachse A steht.

Nach der Fertigstellung der evolventenförmigen Zahnflanke 30 wird der Fingerfräser 10 durch die Verzahnmaschine neu ausgerichtet, so dass die Fräserachse A parallel zur verbleibenden Zahnflanke 40 verläuft.

Ergänzend sei darauf hingewiesen, dass das erfindungsgemäße Verfahren ohne Weiteres bei der Verzahnung von Schnecken, Schneckenrädern oder Kegelrädern finden können.

## Patentansprüche

1. Verfahren zum Formfräsen einer Werkstückverzahnung, insbesondere Zahnrad (20), auf einer Verzahnmaschine mit einem Fingerfräser (10),
**dadurch gekennzeichnet,**
**dass** die Fingerfräserachse (A) in etwa parallel zur bearbeiteten Zahnflanke (40) des Werkstückes verläuft, und dass der Fingerfräser (10) in Fräserachsenrichtung ein nahezu gleichbleibendes Durchmesserprofil vom Zahnkopfbereich bis hin zum Zahnfussbereich entlang seiner Fräserachse (A) aufweist, um eine annähernd gleichmässige Schnittgeschwindigkeit über der Fräserbreite und über die gesamte Zahnflanke (40) des Werkstückes zu erreichen, wobei der Fingerfräser (10) eine Aussenkontur zur Herstellung/Bearbeitung einer Evolventen- oder Zykloidenverzahnung aufweist.

2. Verfahren nach Anspruch 1, **dadurch gekennzeichnet, dass** eine einseitige Fräsbearbeitung der Zahnflanke (40) des Werkstückes erfolgt.

## Claims

1. A method for form milling a workpiece toothing arrangement, in particular a toothed wheel (20), on a gear cutting machine having an end mill (10),
**characterized in that**
the end mill axis (A) extends approximately parallel to the machined tooth flank (40) of the workpiece; and **in that** the end mill (10) has an almost unchanging diameter profile from the tooth head region up to the tooth base region along its cutter axis (A) in the cutter axis direction to achieve an approximately constant cutting speed over the cutter width and over the total tooth flank (40) of the workpiece, with the end mill (10) having an outer contour for manufacturing/machining an involute toothing or cycloid toothing.

2. A method in accordance with claim 1, **characterized in that** a one-sided cutting machining of the tooth flank (40) of the workpiece takes place.

## Revendications

1. Procédé de fraisage de profils d'une denture d'une pièce, en particulier une roue dentée (20), sur une machine à tailler les engrenages au moyen d'une fraise à queue (10),
**caractérisé en ce que**
l'axe de fraise à queue (A) s'étend à peu près parallèlement au flanc de dent (40) usiné de la pièce, et **en ce que** la fraise à queue (10) comporte dans la direction de l'axe de fraise un profil diamétral presque constant de la zone de sommet de la dent jusqu'à la zone de pied de la dent le long de son axe de fraise (A) afin d'obtenir une vitesse de coupe approximativement régulière sur la largeur de la fraise et sur tout le flanc de dent (40) de la pièce, la fraise à queue (10) comportant un profil extérieur pour fabriquer/usiner une denture à développante ou une denture cycloïdale.

2. Procédé selon la revendication 1, **caractérisé en ce qu'**un usinage à la fraise sur un côté du flanc de dent (40) de la pièce est effectué.

Fig. 1

Fig. 2

## Fig. 3

# Fig. 4

# Fig. 5

**IN DER BESCHREIBUNG AUFGEFÜHRTE DOKUMENTE**

**In der Beschreibung aufgeführte Patentdokumente**

- WO 2005060650 A